# EUROPEAN PATENT APPLICATION

(11) **EP 3 264 694 A1**
(43) Date of publication of application: **03.01.2018**
(21) Application number: 17165590.5
(22) Date of filing: 07.04.2017
(51) Int. Cl.: H04L 12/755, H04L 29/12, H04L 12/46, H04L 12/715, H04L 12/721, H04L 12/723, H04L 12/741

(54) **SIGNALING IP ADDRESS MOBILITY IN ETHERNET VIRTUAL PRIVATE NETWORKS**

(30) Priority: 27.06.2016 US 201615194359
(71) Applicant: Juniper Networks, Inc., Sunnyvale, CA 94089 (US)
(72) Inventor: BICKHART, Ryan, San Francisco, California 94114 (US); SINGH, Nitin, Fremont, California 94539 (US)
(74) Representative: D Young & Co LLP

(57) **Abstract**

In some examples, a provider edge device provides L2 virtual bridge connectivity for at least one customer network using an EVPN instance and L3 routing using an IRB interface that is a L3 routing interface assigned to the EVPN instance; the provider edge device obtains an indication of a new binding for an endpoint device of the at least one customer network, the new binding comprising a first L2 address and a L3 address that are assigned to the endpoint device; and the provider edge device outputs, in response to determining the provider edge device stores a prior binding for the endpoint device of a second L2 address and the L3 address that are assigned to the endpoint device, an EVPN route comprising an indication of the new binding and an indication the new binding is an updated binding of the prior binding for the endpoint device.

## Description

### TECHNICAL FIELD

The disclosure relates to computer networks and, more particularly, to routing packets within computer networks.

### BACKGROUND

A computer network is a collection of interconnected computing devices that can exchange data and share resources. Example network devices include switches or other layer two devices that operate within the second layer (L2) of the Open Systems Interconnection (OSI) reference model, i.e., the data link layer, and routers or other layer three (L3) devices that operate within the third layer of the OSI reference model, i.e., the network layer. Network devices within computer networks often include a control unit that provides control plane functionality for the network device and forwarding components for routing or switching data units.

An Ethernet Virtual Private Network (EVPN) may be used to extend two or more remote layer two (L2) customer networks through an intermediate layer three (L3) network (usually referred to as a provider network), in a transparent manner, i.e., as if the intermediate L3 network does not exist. In particular, the EVPN transports L2 communications, such as Ethernet packets or "frames," between customer networks via traffic engineered label switched paths (LSP) through the intermediate network in accordance with one or more multiprotocol label switching (MPLS) protocols. In a typical configuration, provider edge (PE) devices (e.g., routers and/or switches) coupled to the customer edge (CE) network devices of the customer networks define label switched paths (LSPs) within the provider network to carry encapsulated L2 communications as if these customer networks were directly attached to the same local area network (LAN). In some configurations, the PE devices may also be connected by an IP infrastructure in which case IP/GRE tunneling or other IP tunneling can be used between the network devices.

In an EVPN, L2 address learning (also referred to as "MAC learning") in a PE device occurs in the control plane rather than in the data plane (as happens with traditional bridging) using a routing protocol. For example, in EVPNs, a PE device typically uses the Border Gateway Protocol (BGP) (i.e., an L3 routing protocol) to advertise to other provider edge network devices the MAC addresses the PE device has learned from the local consumer edge network devices to which the PE device is connected. As one example, a PE device may use a BGP route advertisement message to announce reachability information for the EVPN, where the BGP route advertisement specifies one or more MAC addresses learned by the PE device instead of L3 routing information. Additional example information with respect to EVPN is described in "BGP MPLS-Based Ethernet VPN," Request for Comments (RFC) 7432, Internet Engineering Task Force (IETF), and February, 2015, the entire contents of which are incorporated herein by reference.

To facilitate inter-subnet forwarding among customer endpoints across different L3 subnets, a PE device may be configured with an EVPN instance that uses an integrated routing and bridging (IRB) interface to locally perform L3 routing of inter-subnet traffic rather than via an L3 gateway. A PE device configured with an IRB interface for an EVPN instance may therefore both locally route inter-subnet traffic and bridge intra-subnet traffic. Additional example information with respect to integrated routing and bridging for EVPNs is described in "Integrated Routing and Bridging in EVPN," draft-ietf-bess-evpn-inter-subnet-forwarding-01, L2VPN Workgroup, October 18, 2015, the entire contents of which are incorporated herein by reference. In response to locally learning a L2/L3 (e.g., MAC/IP) binding for a customer endpoint bridged by an EVPN instance, a PE router may advertise the binding using a BGP EVPN route with a BGP Network Layer Reachability Information (NLRI) that indicates the L2 address and L3 address for the customer endpoint are reachable via the PE router. In RFC 7432, this type of BGP EVPN route is referred to as a MAC/IP advertisement route (Type 2).

### SUMMARY

In general, techniques are described for indicating, in an EVPN route advertisement, migration of a customer endpoint among provider edge (PE) devices where, as a result of the migration to a host machine reachable via a different provider edge device, the customer endpoint has a new L2 (e.g., MAC) address while retaining its L3 (e.g., IP) address. For example, multiple PE devices of an L3 network may be configured to provide an EVPN to multiple customer networks attached to the PE devices, which provide L2 virtual bridge connectivity among the customer networks using EVPN techniques and also provide L3 routing among subnets of the customer networks using integrated routing and bridging (IRB) instances for the EVPN instance. Each customer network may include one or more customer endpoints. A customer endpoint, such as a virtual machine, may be in some cases be migrated from a customer network bridged by a previous PE device using an EVPN instance to a customer device bridged by a different, new PE device using the EVPN instance. The migration may result in the customer endpoint being configured with a new MAC address while retaining its IP address.

Because the previous PE device has advertised the MAC/IP binding of the customer endpoint that has migrated, the new PE device (and other PE devices that participate in the EVPN instance) may store the MAC/IP binding. In response to locally learning a new MAC/IP binding of the customer device that includes the new MAC address, the new PE device may determine that it already stores an existing MAC/IP binding for the IP address of the customer endpoint. In order to indicate that the new PE device is a next hop for the IP address of the customer endpoint, the new PE device advertises the new binding with an indication that the new binding is an update of the previous binding learned (e.g., remotely) by the previous PE device and thus supersedes the previous binding for the IP address within the EVPN instance. In some examples, the indication is a IP mobility sequence number of an IP mobility extended community for a BGP EVPN MAC/IP advertisement route that advertises the MAC/IP binding. In some examples, the new PE device may have configured IRB interface that performs bridging for the IP subnet that includes the IP address of the customer endpoint.

By indicating in an EVPN MAC/IP advertisement route that a new binding is an update of a previous binding, PE devices implementing an EVPN may determine, from the MAC/IP advertisement route received, that one or more previously-received and stored MAC/IP bindings for an IP address for a customer endpoint are stale. As a result, although multiple MAC/IP bindings for the IP address may be temporarily and concurrently stored by each of the PE devices for the EVPN instance until the previous PE device withdraws its locally-learned corresponding MAC/IP binding for the IP address of the customer endpoint, the PE devices may route traffic destined for the IP address to the new PE device that advertised the new binding having the most up-to-date MAC address for the customer endpoint. The new PE device, in turn, may bridge the traffic to the customer endpoint based on the destination MAC address of the traffic.

In some examples, a method includes receiving, by a provider edge device of a layer 3 network, configuration data configuring the provider edge device to provide layer 2 virtual bridge connectivity for at least one customer network using an Ethernet virtual private network (EVPN) instance and layer 3 routing using an integrated routing and bridging (IRB) interface that is a layer 3 routing interface assigned to the EVPN instance; obtaining, by the provider edge device, an indication of a new binding for an endpoint device of the at least one customer network, the new binding comprising a first layer 2 address and a layer 3 address that are assigned to the endpoint device; and outputting, by the provider edge device in response to determining the provider edge device stores a prior binding for the endpoint device of a second layer 2 address and the layer 3 address that are assigned to the endpoint device, an EVPN route comprising an indication of the new binding and an indication the new binding is an updated binding of the prior binding for the endpoint device.

In some examples, a method includes receiving, by a first provider edge device of a layer 3 network, configuration data configuring the provider edge device to provide layer 2 virtual bridge connectivity for at least one customer network using an Ethernet virtual private network (EVPN) instance and layer 3 routing using an integrated routing and bridging (IRB) interface that is a layer 3 routing interface assigned to the EVPN instance; obtaining, by the first provider edge device, an indication of a binding for an endpoint device of the at least one customer network, the binding comprising a first layer 2 address and a layer 3 address that are assigned to the endpoint device; receiving, by the first provider edge device, an EVPN route comprising an indication of a new binding of a second layer 2 address and the layer 3 address that are assigned to the endpoint device and an indication the new binding is an updated binding of the binding; and sending, by the first provider edge device in response to determining a packet comprises a layer 2 destination address corresponding to a layer 2 address for the IRB interface, the packet to a second provider edge device according to the EVPN route based at least on the indication the new binding is an updated binding of the binding.

In some examples, a network device includes one or more processors operably coupled to a memory; a configuration interface configured for execution by the one or more processors to receive configuration data to configure the provider edge device to provide layer 2 virtual bridge connectivity for at least one customer network using an Ethernet virtual private network (EVPN) instance and layer 3 routing using an integrated routing and bridging (IRB) interface that is a layer 3 routing interface assigned to the EVPN instance; a learning module configured for execution by the one or more processors to obtain an indication of a new binding for an endpoint device of the at least one customer network, the new binding comprising a first layer 2 address and a layer 3 address that are assigned to the endpoint device; and a routing process configured for execution by the one or more processors to output, in response to determining the provider edge device stores a prior binding for the endpoint device of a second layer 2 address and the layer 3 address that are assigned to the endpoint device, an EVPN route comprising an indication of the new binding and an indication the new binding is an updated binding of the prior binding for the endpoint device.

In some examples, a network device includes one or more processors operably coupled to a memory; a configuration interface configured for execution by the one or more processors to receive configuration data to configure the provider edge device to provide layer 2 virtual bridge connectivity for at least one customer network using an Ethernet virtual private network (EVPN) instance and layer 3 routing using an integrated routing and bridging (IRB) interface that is a layer 3 routing interface assigned to the EVPN instance; a learning module configured for execution by the one or more processors to obtain an indication of a binding for an endpoint device of the at least one customer network, the binding comprising a first layer 2 address and a layer 3 address that are assigned to the endpoint device; a routing process configured for execution by the one or more processors to an EVPN route comprising an indication of a new binding of a second layer 2 address and the layer 3 address that are assigned to the endpoint device and an indication the new binding is an updated binding of the binding, wherein the routing process is further configured to send, in response to a determination a packet comprises a layer 2 destination address corresponding to a layer 2 address for the IRB interface, the packet to a second provider edge device according to the EVPN route based at least on the indication the new binding is an updated binding of the binding.

The details of one or more embodiments are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example system, in accordance with techniques of the disclosure.
FIG. 2 is a block diagram illustrating further details of a network device that implements techniques to indicate an updated MAC/IP address binding and route IP packets for an EVPN instance accordingly, in accordance with techniques of the disclosure.
FIG. 3 is a flowchart illustrating an example mode of operation for a provider edge network device to indicate IP mobility in an EVPN instance, in accordance with techniques of this disclosure.
FIG. 4 is a flowchart illustrating an example mode of operation for a provider edge network device to perform inter-subnet routing in an EVPN instance using IP mobility sequence numbers associated with advertised MAC/IP bindings, in accordance with techniques of this disclosure.
FIG. 5 is a block diagram illustrating an example EVPN MAC/IP advertisement route that includes, in accordance with techniques described herein, an IP mobility sequence number to indicate IP mobility by an endpoint of an EVPN instance.

Like reference characters denote like elements throughout the figures and text.

### DETAILED DESCRIPTION

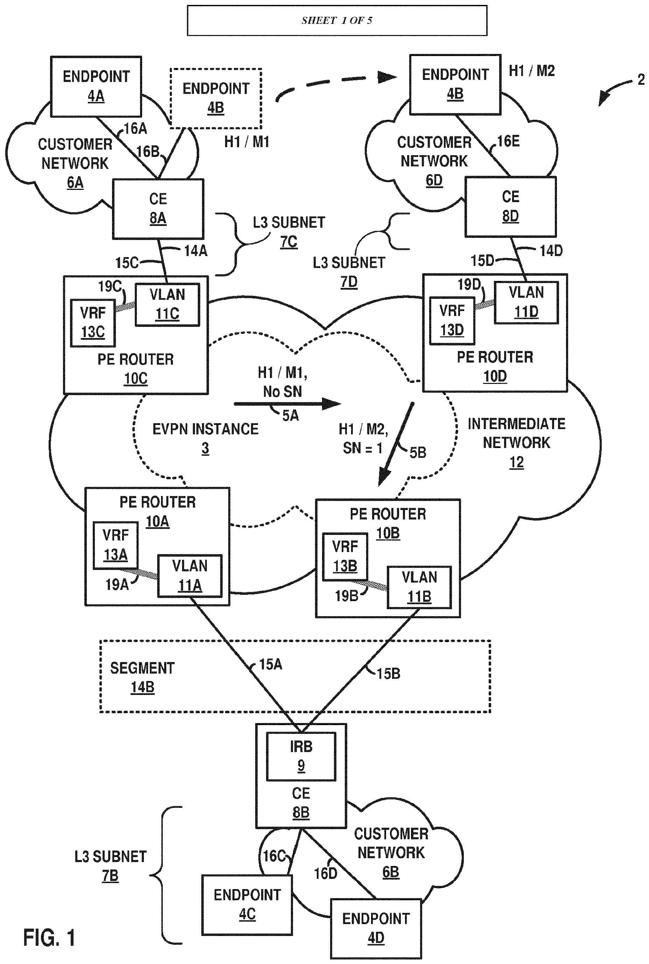

FIG. 1 is a block diagram illustrating an example system, in accordance with techniques of the disclosure. In the example of FIG. 1, PE routers 10A-10D ("PE routers 10" or, more simply, "PEs 10") provide customer endpoints 4A-4D ("endpoints 4") associated with customer networks 6A-6D ("customer networks 6") with access to an intermediate layer 3 (L3) network (here, "intermediate network 12") via customer edge (CE) devices 8A-8D ("CEs 8"). Although described as routers, PE routers 10 may represent other types of PE devices capable of performing PE operations for an Ethernet Virtual Private Network (EVPN).

PE routers 10 and CEs 8 may each represent a router, switch, or other suitable network devices that participates in a layer two (L2) virtual private network (VPN) (L2VPN) service, such as an EVPN. Customer networks 6 may be networks for geographically or logically separated sites of an enterprise or may represent networks for different customers of the intermediate network 12 (or tenants of a data center intermediate network). Each of endpoints 4 may represent one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices. The configuration of network 2 illustrated in FIG. 1 is merely an example. For example, an enterprise may include any number of customer networks 6. Nonetheless, for ease of description, only customer networks 6A-6D are illustrated in FIG. 1.

Intermediate network 12 may represent a service provider network that is owned and operated by a service provider, which is usually large telecommunications entity or corporation. Intermediate network 12 represents an L3 computer network, where reference to a layer followed by a number refers to a corresponding layer in the Open Systems Interconnection (OSI) model. Intermediate network 12 is a L3 network in the sense that it natively supports L3 operations as described in the OSI model. Common L3 operations include those performed in accordance with L3 protocols, such as the Internet protocol (IP). L3 is also known as a "network layer" in the OSI model and the "IP layer" in the TCP/IP model, and the term L3 may be used interchangeably with the and "network layer" and "IP" throughout this disclosure.

Although not illustrated, intermediate network 12 may be coupled to one or more networks administered by other providers, and may thus form part of a large-scale public network infrastructure, e.g., the Internet. Consequently, customer networks 6 may be viewed as edge networks of the Internet where intermediate network is a service provider network. Intermediate network 12 may provide computing devices within customer networks 6 with access to the Internet, and may allow the computing devices within the customer networks to communicate with each other. In some cases, intermediate network 12 represents a data center L2/L3 switching fabric (or "data center fabric network") that interconnects CEs for tenants of the data center, where a tenant may represent an organization or a logical partitioning of resources, data, and/or applications within the data center.

Intermediate network 12 may include a variety of network devices other than PE routers 10. For instance, service provider network 12 may include a route reflector, one or more provider routers (also known as "P" or "core" routers), switches, and so forth. In some examples, the route reflector (not shown) may reside within intermediate network 12 and along a path in a service provider network between two or more PE routers. Because of an internal BGP (IBGP) full-mesh requirement, some networks may use route reflectors to simplify configuration. Using a route reflector, routers are grouped into clusters, which are identified by numeric identifiers unique to an autonomous system (AS). Within the cluster, a BGP session is configured from a single router (the route reflector) to each internal peer. With this configuration, the IBGP full-mesh requirement may be met by the route reflector. To use route reflection in an AS, one or more routers are designated as a route reflector-typically, one per point of presence (POP). Route reflectors have the BGP ability to re-advertise routes learned from an internal peer to other internal peers. Rather than requiring all internal peers to be fully meshed with each other, route reflection may have only the route reflector be fully meshed with all internal peers.

Although additional network devices are not shown for ease of explanation, it should be understood that system 2 may comprise additional network and/or computing devices such as, for example, one or more additional switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices. Moreover, although the elements of system 2 are illustrated as being directly coupled, it should be understood that one or more additional network elements may be included along any of the illustrated links 15, 16, such that the network elements of system 2 are not directly coupled.

Intermediate network 12 may provide a number of residential and business services, including residential and business class data services (which are often referred to as "Internet services" in that these data services permit access to the collection of publically accessible networks referred to as the Internet), residential and business class telephone and/or voice services, and residential and business class television services. One such business class data service offered by a service provider intermediate network 12 includes L2 EVPN service. Intermediate network 12 that represents an L2/L3 switch fabric for one or more data centers may implement an L2 EVPN service. An EVPN is a service that provides a form of L2 connectivity across an intermediate L3 network, such as intermediate network 12, to interconnect two or more L2 customer networks, such as L2 customer networks 6, that may be located in different geographical areas (in the case of service provider network implementation) and/or in different racks (in the case of a data center implementation). Often, EVPN is transparent to the customer networks in that these customer networks are not aware of the intervening intermediate network and instead act and operate as if these customer networks were directly connected and formed a single L2 network. In a way, EVPN enables a form of a transparent LAN connection between two customer sites that each operates a L2 network and, for this reason, EVPN may also be referred to as a "transparent LAN service."

To configure an EVPN, a network operator of the intermediate network 12 configures, via configuration or management interfaces, various devices included within intermediate network 12 that interface with L2 customer networks 6. The EVPN configuration may include an EVPN instance (EVI), which consists of one or more broadcast domains. Generally, an EVI may be associated with a virtual routing and forwarding instance (VRF) on a PE router, such as any of PE routers 10A-10D. Consequently, multiple EVIs may be configured on PE routers 10 for Ethernet segments 14A-14C (collectively, "Ethernet segments 14"), as further described herein, each providing a separate, logical layer two (L2) forwarding domain. In this way, multiple EVIs may be configured that each includes one or more of PE routers 10A-10D. In some examples, Ethernet Tags are then used to identify a particular broadcast domain, e.g., a VLAN, in an EVI. A PE router may advertise an MPLS service label (or "MAC label," "MAC route label," or more simply "label") per-<ESI, Ethernet Tag> combination. This label assignment methodology is referred to as a per-<ESI, Ethernet Tag> label assignment. Alternatively, a PE router may advertise a unique label per MAC address. In still another example, a PE router may advertise the same single label for all MAC addresses in a given EVI. This label assignment methodology is referred to as a per-EVI label assignment. Such labels are advertised by PEs 10 in EVPN MAC advertisement routes.

An EVPN instance (EVI) 3 is configured within intermediate network 12 for customer networks 6 to enable endpoints 4 within customer networks 6 to communicate with one another via the EVI as if endpoints 4 were directly connected via a L2 network. As used herein, an EVI is an EVPN routing and forwarding instance spanning PE routers 10A-10D participating in the EVI. Each of PE routers 10 is configured with EVI 3 and exchanges EVPN routes to implement EVI 3.

As part of establishing EVI 3, PE routers 10A-10D triggers EVPN designated forwarder (DF) election for multi-homed Ethernet segment 14B. This may be done, for example, by the PE routers 10A-10D that participates in any of Ethernet segments 14A-14C outputting an EVPN route advertising an Ethernet Segment Identifier (ESI). In addition, for each EVI, the PE router outputs an EVPN route advertising an Ethernet Auto-Discovery (AD) route specifying the relevant ESI for the Ethernet segment for the EVI. Once the EVPN is operational for the {EVI, ESI} pair, PE routers 10A-10D output routing protocol messages to one another to announce media access control (MAC) addresses associated with endpoints 4. The topology of system 2 is an example. In some examples, the EVI 3 may include more or fewer (i.e., zero) multi-homed Ethernet segments.

For example, in typical operation, PE routers 10A-10D communicate using the Border Gateway Protocol (BGP) to transport BGP Network Layer Reachability Information (NLRI) for the EVPN and may define different EVPN route types for conveying EVPN information via the BGP routing protocol. The EVPN NLRI is typically carried in BGP using BGP Multiprotocol Extensions. An Ethernet Segment route advertised by each PE router 10A-10D using BGP includes a Route Distinguisher and Ethernet Segment Identifier. An Ethernet AD route advertised by each PE router 10A-10D for each EVI, specifies a Route Distinguisher (RD) (which may include, e.g., an IP address of the PE), ESI, Ethernet Tag Identifier, and MPLS label. Subsequent BGP media access control (MAC) routes output by PE router 10A-10D announce MAC addresses of endpoints 4 for the EVPN and include a RD, ESI, Ethernet Tag Identifier, MAC address and MAC address length, IP address and IP address length, and MPLS label.

In the example of FIG. 1, when providing the EVPN service to customer networks 6, PE routers 10 and CEs 8 perform MAC address learning to efficiently forward L2 network communications in system 2. That is, as PE routers 10 and CEs 8 forward Ethernet frames, the routers learn L2 state information for the L2 network, including MAC addressing information for endpoints 4 within the network and the physical ports through which endpoints 4 are reachable. PE routers 10 and CE 8 typically store the MAC addressing information in MAC tables associated with respective interfaces. When forwarding an individual Ethernet frame received on one interface, a router typically broadcasts the Ethernet frame to all other interfaces associated with the EVPN unless the router has previously learned the specific interface through which the destination MAC address specified in the Ethernet frame is reachable. In this case, the router forwards a single copy of the Ethernet frame out the associated interface.

Moreover, as PE routers 10 learn the MAC address for endpoints 4 reachable through local attachment circuits, the PE routers 10 use MAC address route advertisements of a layer three (L3) routing protocol (i.e., Multi-Protocol BGP (MP-BGP) in this example) to share the learned MAC addresses and to provide an indication that the MAC addresses are reachable through the particular PE router that is issuing the route advertisement. In the EVPN implemented using PE routers 10 for a given EVI, each of PE routers 10 advertises the locally learned MAC addresses to other PE routers 10 using a BGP route advertisement, also referred to herein as a "MAC route," "MAC Advertisement route," or "MAC/IP Advertisement." As further described below, a MAC route typically specifies an individual MAC address of endpoints 4 along with additional forwarding information, such as a route descriptor, route target, layer 2 segment identifier, MPLS label, etc. In this way, PE routers 10 use BGP to advertise and share the MAC addresses learned when forwarding layer two communications associated with the EVPN. Accordingly, PE routers 10 may perform both local learning and remote learning of MAC addresses.

Each of PE routers 10 uses MAC routes specifying the MAC addresses learned by other PE routers to determine how to forward L2 communications to MAC addresses that belong endpoints 4 connected to other PEs, i.e., to remote CEs and/or endpoints behind CEs operatively coupled to PE routers. That is, each of PE routers 10 determine whether Ethernet frames can be sent directly to a particular one of the other PE routers 10 or whether to treat the Ethernet frames as so called "BUM" traffic (Broadcast, Unidentified unicast or Multicast traffic) that is to be flooded within the EVPN based on the MAC addresses learning information received from the other PE routers.

As shown in FIG. 1, CEs 8 may be multi- and/or singly-homed to one or more of PE routers 10. In EVPN, a CE may be said to be multi-homed when it is coupled to two physically different PE routers on the same EVI when the PE routers are resident on the same physical Ethernet Segment. CE 8B is coupled to PE routers 10A and 10B via links 15A and 15B, respectively, where PE routers 10A and 10B are capable of providing access to EVPN for L2 customer network 6B via CE 8B. In instances where a given customer network (such as customer network 6B) may couple to service provider network 12 via two different and, to a certain extent, redundant links, the customer network may be referred to as being "multi-homed." In this example, CE 8B may be multi-homed to PE routers 10A and 10B because CE 8B is coupled to two different PE routers 10A and 10B via separate and, to a certain extent, redundant links 15A and 15B where both of PE routers 10A and 10B are capable of providing access to EVPN for L2 customer network 6B. Multi-homed networks are often employed by network operators so as to improve access to EVPN provided by service provider network 12 should a failure in one of links 15A and 15B occur. In a typical EVPN configuration, only the multi-homing PEs 10A-10B participate in DF election for each ESI. PE 10C not connected to the ESI has no direct knowledge of the DF election result for a give ESI.

An EVPN, such as EVI 3 illustrated in FIG. 1, may operate over a Multi-Protocol Label Switching (MPLS) configured network and use MPLS labels to forward network traffic accordingly. MPLS is a mechanism used to engineer traffic patterns within Internet Protocol (IP) networks according to the routing information maintained by the routers in the networks. By utilizing MPLS protocols, such as the Label Distribution protocol (LDP) or the Resource Reservation Protocol with Traffic Engineering extensions (RSVP-TE), a source device can request a path through a network to a destination device, i.e., a Label Switched Path (LSP). An LSP defines a distinct path through the network to carry MPLS packets from the source device to a destination device. Using a MPLS protocol, each router along an LSP allocates a label and propagates the label to the closest upstream router along the path. Routers along the path add or remote the labels and perform other MPLS operations to forward the MPLS packets along the established path.

As shown in the example of FIG. 1, intermediate network 12 may provide an MPLS core or IP tunneling infrastructure for sending network packets from customer network 6A to and from customer network 6B. Each of PE routers 10A-10D implement the MPLS protocol and apply one or more MPLS labels, i.e., a label stack, to network packets in accordance with routing and forwarding information configured at each respective PE router. In an EVPN, a label stack applied to a network packet may include multiple labels. For instance, a label stack may include an outer label and an inner label.

The outer label serves as a "transport label" that uniquely identifies a PE router in an MPLS core. That is, each of PE routers 10A-10D may exchange control plane messages at configuration and startup that specify an outer label that uniquely identifies each respective PE router. For instance, PE router 10A may send control plane messages that specify an outer label that identifies PE router 10A to PE routers 10B-10D. PE routers 10B-10D may configure their respective forwarding units such that network packets that include the outer label corresponding to PE router 10A are forwarded to PE router 10A.

The inner label, or "service label," of the MPLS label stack provides EVPN-specific configuration information. As described above, EVPN defines Ethernet AD routes, MAC/IP advertisement routes, and Ethernet Segment routes, for instance. An Ethernet AD route, for example, may be structured according to the following format of Table 1:

**Table 1: AD route advertisement**

| |
|---|
| Route Distinguisher (8 octets) |
| Ethernet Segment Identifier (10 octets) |
| Ethernet Tag ID (4 octets) |
| MPLS Label (3 octets) |

In one example, PE router 10A may send an Ethernet AD route to PE router 10C initially at startup and configuration that includes an MPLS label as shown above. PE router 10C may configure one or more of its forwarding units to apply the MPLS label of the Ethernet AD route from PE router 10A as the inner label in a label stack applied to network packets that are destined to PE router 10A. PE router 10C would then apply the transport label identifying PE router 10A as the outer label in the label stack. In this way, the inner label provides EVPN-specification configuration information about the Ethernet AD route that PE router 10C uses to forward network packets through the EVPN.

In some configurations, to provide flexibility and scalability, multiple bridge domains can be defined for a particular EVPN instance (EVI). One or more EVIs can be associated with a single L3 VPN virtual routing and forwarding instance (VRF). For example, each customer of the service provider network (or data center tenant) may be assigned a unique VRF; a customer/tenant can encompass one or more EVPN instances and one or more bridge domains (e.g., VLAN or VxLAN) per EVPN instance. To support this model, each configured bridge domain (including the default bridge domain for an EVPN instance) requires a IRB logical interface to perform the L2 and L3 functions. Each local bridge domain or local IRB interface for a PE router 10 maps to a unique IP subnet in the VRF for the PE router 10. IRB interfaces may be configured on each configured bridge domain including the default bridge domain for an EVPN instance.

In some examples, one or more of PE routers 10 may embed Network Virtualization Edge (NVE) functionality within the respective PEs, as described in "Network Virtualization Edge (NVE)," February 13, 2014, https://tools.ietf.org/html/draft-yong-nvo3-nve-03, which is hereby incorporated by reference herein in its entirety. In some examples, a PE that implements NVE functionality may be referred to as an NVE device.

As shown in FIG. 1, PEs 10A-10D include respective VRFs 13A-13D ("VRFs 13") for the EVI 3 that includes customer networks 6. Generally, VRFs permits multiple routing tables to exist within a single physical router. An attachment circuit may be associated with a particular VRF, and the particular VRF may be configured to forward traffic for the attachment circuit. VRFs 13 may be configured to include functionality described in "BGP/MPLS IP Virtual Private Networks (VPNs)," February 2006, https://tools.ietf.org/html/rfc4364, which is hereby incorporated by reference herein in its entirety.

As shown in FIG. 1, Virtual Local Area Networks (VLANs) may be configured for PEs 10. Accordingly, PEs 10 may forward network packets to between customer networks 6 using the bridge domain defined by the VLANs. As shown in FIG. 1, PEs 10A-10D are configured with respective VLANs instances 11A-11D. Each instance may represent functionality implemented by the respective PE for forwarding network packets within one or more virtual layer 2 networks identified by a corresponding VLAN identifiers.

PEs 10 also implement integrated routing and bridging, which supports layer 2 bridging and layer 3 routing on the same interface. As such, integrated routing and bridging allows a router to route local packets to another routed interface or to another bridging domain that has a layer 3 protocol configured. Integrated Routing and Bridging (IRB) interfaces (or "IRBs") are logical interfaces that enable a PE or CE to recognize which packets are being sent to local addresses so that they are bridged whenever possible and are routed only when needed. Accordingly, IRBs may be used to locally route inter-subnet traffic. For instance, using one or more IRBs, a PE may route inter-subnet traffic between multiple VLANs configured for multiple IRBs for a routing instance of the PE.

In the example of FIG. 1, each of PEs 10 is illustrated as having a single IRB 19 associated with a VRF 13 and having a VLAN-based bridging domain of a VLAN 11. PE 10A includes IRB 19A with the VLAN 11A bridging domain; PE 10B includes IRB 19B with the VLAN 11B bridging domain; PE 10C includes IRB 19C with the VLAN 11C bridging domain; and PE 10D includes IRB 19D with the VLAN 11D bridging domain. PE 10A, e.g., may be configured with multiple IRBs associated with VRF 13A and having different VLAN-based bridging domains and, accordingly, may route traffic between the VLANs using the multiple IRBs. One or more of PEs 10 may implement IRB as described in "Integrated Routing and Bridging in EVPN", ietf-bess-evpn-inter-subnet-forwarding, October 18, 2015, https://tools.ietf.org/html/draft-ietf-bess-evpn-inter-subnet-forwarding-01, which is hereby incorporated by reference herein in its entirety. VLAN 11C is a virtual L2 network for L3 subnet 7C reachable via PE router 10C, while VLAN 10D is a virtual L2 network for L3 subnet 7D reachable via PE router 10D.

CE 8B is configured with IRB 9 having a bridging domain that provides L2 reachability to L3 subnet 7 that includes endpoints 4C, 4D. The IRB 9 may be configured with a L3 address (e.g., an IPv4/IPv6 address) that is within the bridging domains for IRBs 19A, 19B, such that the IRB 9 routing interface for CE 8B is reachable by the routing interfaces for IRBs 19A, 19B. In this way, IRB 9 provides L2/L3 reachability to L3 subnet 7B from PEs 10A, 10B.

As noted above, PE routers 10 locally learn MAC addresses for customer endpoints 4 reachable via respective local attachment circuits. In some cases, PE routers may learn the IP addresses associated with respective MAC addresses in the control or management plane between the CEs 8 and the PE routers 10. As used hereinafter, a "MAC/IP binding" refers to an association between a MAC address and an IP address for a customer endpoint 4. Alternatively, PE routers 10 may learn MAC/IP bindings in the data plane by snooping certain messages to or from CEs 8, such as Address Resolution Protocol (ARP) or Neighbor Discovery Protocol (NDP) messages. When a PE router 10 learns the IP address associated with a MAC address of a locally connected customer endpoint 4, the PE router 10 may advertise the IP address along with the MAC address to other PE routers 10 by including it in an MAC/IP Advertisement route. The IP address may be an IPv4 address encoded using 4 octets or an IPv6 address encoded using 16 octets.

In the example of system 2, endpoint 4B is initially a member of customer network 6A and is assigned IP (or "host") address *H1* and MAC address *M1* and reachable PE router 10C using EVI 3. Endpoint 4B may represent a virtual machine, with MAC address *M1* assigned by a virtual machine manager for a host of endpoint 4B. PE router 10C locally learns the MAC/IP binding of *H1* / *M1* for endpoint 4B on VLAN 11C configured for EVI 3 and therefore advertises the MAC/IP binding in EVPN MAC/IP advertisement route 5A to the other PE routers 10. EVPN MAC/IP advertisement route 5A is an EVPN route for EVI 3 in that it includes the associated RD and route targets for EVI 3. PE routers 10 receive EVPN MAC/IP advertisement route 5A that includes the *H1* / *M1* and that specifies PE router 10C as an L3 next-hop. As a result, each of PE routers 10 may store the EVPN MAC/IP advertisement route 5A to its corresponding VRF 13 for EVI 3.

Endpoint 4B may subsequently be assigned a different MAC address *M2* while retaining IP address *H1.* In addition, endpoint 4B may subsequently be a member of customer network 6D reachable by PE router 10D using EVI 3. Migration of an endpoint from one customer network to another while the endpoint retains its IP address is known as IP address mobility or, more simply, IP mobility. For example, endpoint 4B may represent a virtual machine that is migrated from a host server of customer network 6A to a host server of customer network 6B. A virtual machine manager or operator may assign the new MAC address *M2* to the endpoint 4B.

PE router 10D may locally learn the new MAC/IP binding of *H1* / *M2* for endpoint 4B on VLAN 11D configured for EVI 3. PE router 10D advertises the new MAC/IP binding of *H1* / *M2* in EVPN MAC/IP advertisement route 5B to other PE routers 10, which store the EVPN MAC/IP advertisement route 5B to respective VRFs 13 for EVI 3. EVPN MAC/IP advertisement route 5B is an EVPN route for EVI 3 in that it includes the associated RD and route targets for EVI 3. As a result, each of PE routers 10 may store multiple MAC/IP bindings for the IP address *H1* for EVI 3.

According to RFC 7432, when an IP address for a customer endpoint is dissociated with a MAC address for the customer endpoint bound to the IP address, the EVPN MAC/IP advertisement route with that particular IP address must be withdrawn. However, in some cases, the PE router 10 that has advertised the EVPN MAC/IP advertisement route with the binding and is thus responsible for withdrawal (per MP-BGP) may not learn of the disassociation for some time. Consequently, a stale binding may be stored to VRFs for an EVI until such time as the advertising PE router 10 withdraws the corresponding EVPN MAC/IP advertisement route or the corresponding expires. If a PE router 10 receives separate EVPN MAC/IP advertisement routes for an EVI with different MAC/IP bindings, because the routes are not the same, the receiving PE router 10 stores both routes to the VRF for the EVI.

In accordance with techniques of this disclosure, EVPN MAC/IP advertisement route 5B is extended to include data that indicates the new MAC/IP binding being advertised for endpoint 4B is an update of the *H1* / *M1* binding locally learned by the PE router 10C and thus supersedes the *H1* / *M1* binding for the IP address *H1* stored to the EVI 3 VRFs 13. In some examples, PE router 10D determines that VRF 13D for EVI 3 already stores a MAC/IP binding for IP address *H1* (e.g., EVPN MAC/IP advertisement route 5A). In response to this determination, PE router 10D generates EVPN MAC/IP advertisement route 5B to include both the new MAC/IP binding of *H1* / *M2,* locally learned by PE router 10D, and the data that indicates the new MAC binding is an updated binding of the previous binding.

As a result, PE routers 10 may route IP traffic to the IP address *H1* in EVI 3 by selecting EVPN MAC/IP advertisement route 5B based on the indication that route 5B advertising the new MAC/IP binding is an update of the previous MAC/IP binding advertised in route 5A. In other words, the indication informs PE routers to prefer route 5B over route 5A. Because route 5A specifies PE router 10D as the next-hop for IP address *H1,* PE routers 10 route EVI 3 IP traffic destined for IP address *H1* to PE router 10D, which L2 bridges the EVI 3 IP traffic the endpoint 4B on VLAN 11D based on the destination MAC address of the IP traffic as received from intermediate network 12. PE routers 10 thus have common views of the most recent MAC/IP binding state and can correctly forward IP packets to *H1* based on the most recent MAC address *M2* for endpoint 4B and the next hop PE router 10D by which endpoint 4B is reachable.

For example, PE router 10B may receive an IP packet for routing using IRB 19B, the IP packet sourced by endpoint 4D and destined for endpoint 4B. The IP packet may have a destination MAC address that corresponds to the IRB interface MAC address. PE router 10B therefore determines the IP packet is to be inter-subnet routed and performs an IP lookup in VRF 13B. VRF 13B may, at the time the IP packet is received, store both routes 5A and 5B because route 5A (despite having a stale MAC/IP binding) has yet to be withdrawn by PE router 10C or expire. Based on the data in route 5B indicating that the *H1* / *M2* binding in route 5B is an update of the *H1* / *M1* binding in route 5A, PE router 10B selects route 5B for routing the IP packet to *H1.* PE router 10B may replace the L2 header for the IP packet with a new L2 header specifying a destination L2 address corresponding to *M2,* and tunnel the IP packet with the new L2 header to PE router 10D that is the next hop specified by route 5B. The tunneled packet may include an EVPN label, received route 5B, to identify VLAN 11D to PE router 10D as the bridge domain for the IP packet based on a per-EVI, per-MAC address, or per-<ESI, Ethernet Tag> label assignment by PE router 10D, as described in RFC 7432.

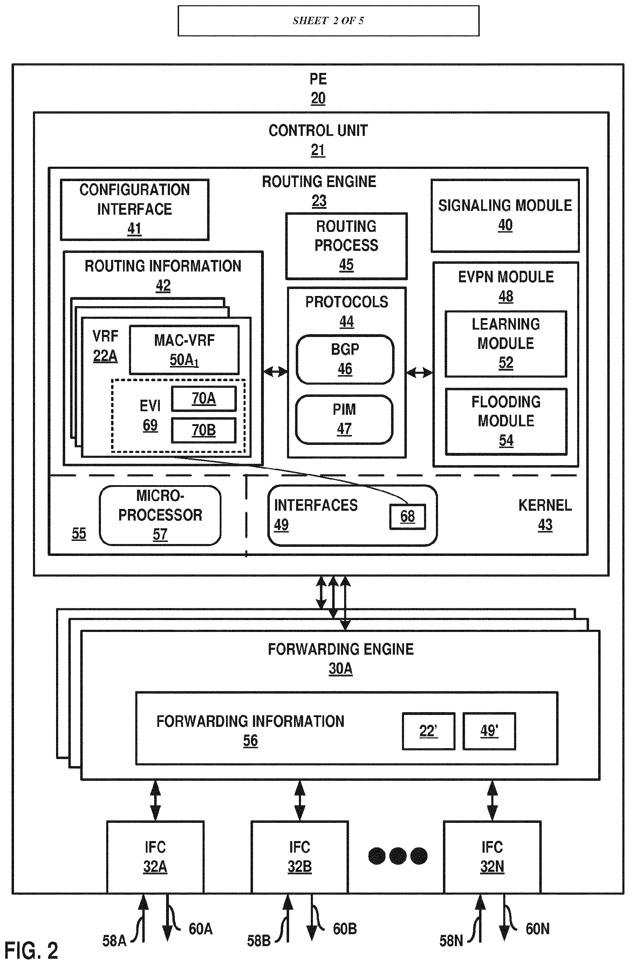

FIG. 2 is a block diagram illustrating further details of a network device that implements techniques to indicate an updated MAC/IP address binding and route IP packets for an EVPN instance accordingly, in accordance with techniques of the disclosure. PE 20 may represent an example instance of any of PE routers 10 of FIG. 1.

PE 20 includes a control unit 21 that includes a routing engine 23, and control unit 21 is coupled to forwarding engines 30A-30N. Each of forwarding engines 30 is associated with one or more of interface cards 32A-32N ("IFCs 32") that receive packets via inbound links 58A-58N ("inbound links 58") and send packets via outbound links 60A-60N ("outbound links 60"). IFCs 32 are typically coupled to links 58, 60 via a number of interface ports (not shown). Inbound links 58 and outbound links 60 may represent physical interfaces, logical interfaces, or some combination thereof.

Elements of control unit 21 and forwarding engines 30 may be implemented solely in software, or hardware, or may be implemented as combinations of software, hardware, or firmware. For example, control unit 21 may include one or more processors, one or more microprocessors, digital signal processors (DSPs), application specific integrated circuits (ASICs), field programmable gate arrays (FPGAs), or any other equivalent integrated or discrete logic circuitry, or any combination thereof, which execute software instructions. In that case, the various software modules of control unit 21 may comprise executable instructions stored, embodied, or encoded in a computer-readable medium, such as a computer-readable storage medium, containing instructions. Instructions embedded or encoded in a computer-readable medium may cause a programmable processor, or other processor, to perform the method, e.g., when the instructions are executed. Computer-readable storage media may include random access memory (RAM), read only memory (ROM), programmable read only memory (PROM), erasable programmable read only memory (EPROM), electronically erasable programmable read only memory (EEPROM), non-volatile random access memory (NVRAM), flash memory, a hard disk, a CD-ROM, a floppy disk, a cassette, a solid state drive, magnetic media, optical media, or other computer-readable media. Computer-readable media may be encoded with instructions corresponding to various aspects of PE 20, e.g., protocols. Control unit 21, in some examples, retrieves and executes the instructions from memory for these aspects.

Routing engine 23 includes kernel 43, which provides a run-time operating environment for user-level processes. Kernel 43 may represent, for example, a UNIX operating system derivative such as Linux or Berkeley Software Distribution (BSD). Kernel 43 offers libraries and drivers by which user-level processes may interact with the underlying system. Hardware environment 55 of routing engine 23 includes microprocessor 57 that executes program instructions loaded into a main memory (not shown in FIG. 2) from a storage device (also not shown in FIG. 2) in order to execute the software stack, including both kernel 43 and processes executing on the operating environment provided by kernel 43. Microprocessor 57 may represent one or more general- or special-purpose processors such as a digital signal processor (DSP), an application specific integrated circuit (ASIC), a field programmable gate array (FPGA), or any other equivalent logic device. Accordingly, the terms "processor" or "controller," as used herein, may refer to any one or more of the foregoing structures or any other structure operable to perform techniques described herein.

Kernel 43 provides an operating environment for a routing process 45 that executes various protocols 44 at different layers of a network stack, including protocols for implementing Ethernet Virtual Private Networks. For example, routing engine 23 includes network protocols that operate at a network layer of the network stack. In the example of FIG. 2, network protocols include the Border Gateway Protocol (BGP) 46, which is a routing protocol. BGP 46 may include Multiprotocol BGP (MP-BGP). Routing engine 23 may include other protocols not shown in FIG. 2, such as an MPLS label distribution protocol and/or other MPLS protocols. Routing engine 23 is responsible for the maintenance of routing information 42 to reflect the current topology of a network and other network entities to which PE 20 is connected. In particular, routing protocols periodically update routing information 42 to accurately reflect the topology of the network and other entities based on routing protocol messages received by PE 20.

As shown in FIG. 2, PE 20 may be configured with multiple VRFs including VRF 22A. VRF 22A represents a virtual routing and forwarding instance. VRF 22A includes at least one routing table for BGP 46. An attachment circuit may be associated with a particular VRF, such as VRF 22A, and the particular VRF may be configured to forward traffic for the attachment circuit.

Forwarding engines 30A-30N ("forwarding engines 30" or "forwarding units 30") represent hardware and logic functions that provide high-speed forwarding of network traffic. Forwarding engines 30 typically includes a set of one or more forwarding chips programmed with forwarding information 56 that maps network destinations with specific next hops and the corresponding output interface ports. In general, when PE 20 receives a packet via one of inbound links 58, one of forwarding engines 30 identifies an associated next hop for the data packet by traversing the programmed forwarding information 56 based on information within the packet. One of forwarding engines 30 (either the ingress forwarding engine or a different, egress forwarding engine) forwards the packet on one of outbound links 60 mapped to the corresponding next hop. Kernel 43 may generate forwarding information 56 to include representations of information stored to VRFs 22 and interfaces 49 in the form of forwarding information 22', 49' for optimized forwarding by forwarding engines 30.

In the example of FIG. 2, forwarding engine 30A includes forwarding information 56. In accordance with routing information 42, forwarding engine 30A stores forwarding information 56 that maps packet field values to next hops and corresponding outbound interface ports 60. For example, routing engine 23 analyzes routing information 42 and generates forwarding information 56 in accordance with routing information 42. Forwarding information 56 may be maintained in the form of one or more tables, link lists, radix trees, databases, flat files, or any other data structures.

Forwarding engine 30A maintains forwarding information 56 for each Ethernet VPN Instance (EVI) established by PE 20 to associate network destinations with specific next hops and the corresponding interface ports. As described an FIG. 1, an EVI may be associated with one or more Ethernet Segments in an EVPN. In general, when PE 20 receives a data packet from an Ethernet Segment via one of inbound links 58, forwarding engine 30A, for example, identifies an associated next hop for the data packet by traversing forwarding information 56 based on information (e.g., labeling information) within the packet. Forwarding engine 30A forwards the data packet on one of outbound links 60 to the corresponding next hop in accordance with forwarding information 56 associated with the Ethernet segment. At this time, forwarding engine 30A may push and/or pop labels from the packet to forward the packet along a correct LSP.

Signaling module 40 outputs control plane messages to automatically establish tunnels to interconnect multiple PE devices including PE 20, establish Ethernet Segments, and otherwise provision one or more EVIs configured for PE 20 and other PEs. Signaling module 40 may signal the PE routers using one or more suitable tunnel signaling protocols, such as Generic Route Encapsulation or MPLS protocols. Signaling module 40 can communicate with forwarding engine 30A to automatically update forwarding information 56. In some examples, signaling module 40 may be part of or executed by routing process 45.

Routing engine 23 also includes a configuration interface 41 that receives and may report configuration data for PE 20. Configuration interface 41 may represent a command line interface; a graphical user interface; Simple Network Management Protocol (SNMP), Netconf, or another configuration protocol; or some combination of the above in some examples. Configuration interface 41 receives configuration data configuring the PE 20 with VRFs 22, interfaces 49, EVI 69, and other constructs that at least partially define the operations for PE 20.

Routing engine 23 also includes an EVPN module 48 having flooding module 54 that performs flooding and a learning module 52 that performs layer two (L2) learning. Learning module 52 may perform remote learning using BGP 46. EVPN module 48 may maintain MAC-VRFs 50 for each EVI established by PE 20, or in alternative examples may maintain one or more MAC tables that are independent of each respective EVI. MAC-VRF 50A₁, for instance, may represent a virtual routing and forwarding table of VRFs 22A for an EVI configured for VRF 22A. Learning module 52 and flooding module 54 may alternatively be configured for execution, in full or in part, by forwarding engine 30A. In some examples, EVPN module 48 may be part of or executed by routing process 45. Learning module 52 may perform MAC/IP binding learning by, e.g., using MAC and IP address information received by PE 20 in ARP or NDP messages.

Learning module 52 may detect a new MAC address on an EVI access interface for an EVI and add the MAC address, with a mapping to the EVI access interface, to MAC-VRF 50A₁ for the EVI. Learning module 52 may then advertise an EVPN MAC/IP advertisement route using BGP 46 to remote PEs. The MAC advertisement route includes a route target corresponding to the EVI, the MAC address, the Ethernet tag for the bridge domain in which the MAC address was learned, the ESI in which the MAC address was learned, the IP address corresponding to the MAC address (if known and if an IRB is configured for the bridge domain, e.g., IRB 68), and a MAC label. With remote MAC learning, learning module 52 may receive an EVPN MAC/IP advertisement route from another PE and install a host route for the IP address (if included) with protocol type EVPN to the appropriate VRF 22 for the EVI and install the MAC address in the MAC-VRF 50 of the EVI, as well as the MAC information associated with the host route in the VRF 22 including the EVPN label.

Forwarding engine 30A receives data packets on inbound links 58 that are destined for one of the PEs in the EVPN. Forwarding engine 30A determines whether the destination customer MAC address of the data packets is included in the one of MAC-VRFs 50 associated with the EVPN. If the MAC address is included in the one of MAC-VRFs 50, then PE 20 forwards the data packets to the destination PE router according to information in the MAC-VRF 50 based on forwarding information 56 associated with the EVPN. If the customer MAC address is not included in the one of MAC-VRFs 50, PE 20 floods the data packets to all of the PE routers based on forwarding information 56 associated with the EVPN. Further example details of remote and local MAC learning for EVPN is described in RFC 7432.

EVPN module 48 additional manages the EVPN multi-homing mode of operation for PE 20. That is, EVPN module 48 operates to maintain EVPN service and traffic forwarding to and from CEs multi-homed to PE 20 and one or more other routers. For example, in the event of a network failure such as a PE 20, 10B to CE 8 link 15A, 15B failure; a failure of any of PEs 20, 10B; or an MPLS-reachability or other type of tunneling failure between any of PEs 20, 10B and the remote PE 10; EVPN module 48 coordinates with PE 10B to ensure that one of PEs 20, 10B is in an active mode and the other is in a standby mode. EVPN module 48 may coordinate with PE 10B to elect a new designated forwarder for Ethernet segment 14.

VRF 22A is further configured with a routing interface of IRB 68, the logical interfaces for which are installed (or "configured") to forwarding information 56 of forwarding engine 30A as IRB 68'. Kernel 43 includes an interfaces table 49 ("interfaces 49") that represents a data structure that includes a corresponding entry for each logical interface configured for PE 20. Interfaces 49 includes an entry for IRB 19A. Entries for respective logical interfaces may specify respective current information describing the logical interfaces. Kernel 43 ma also execute ARP and/or NDP to receive, generate and inject ARP requests and/or NDP neighbor solicitations into the data plane for output via IFCs 32.

Routing process 45 may receive, via BGP 46, an EVPN MAC/IP advertisement route 70A that advertises a MAC/IP binding for an endpoint on an EVI 69 associated with VRF 22A and MAC-VRF 50A₁. Routing process 45 may import and store the route 70A to a route table for EVI 69 per a route target indicated in the route. Learning module 52 may install this locally learned EVPN routing information to MAC-VRF 50A₁ and to VRF 22A as described above for remote MAC learning.

Learning module 52 may subsequently locally learn a new MAC/IP binding on a local EVI access interface for the same EVI 69 associated with VRF 22A and associated with MAC-VRF 50A₁. As a result, routing process 45 may generate an EVPN MAC/IP advertisement route 70B and store the route 70B to a route table for EVI 69 to advertise the new MAC/IP binding. In accordance with techniques described in this disclosure, routing process 45 may determine from the route table for EVI 69 that route 70A already maps the IP address for the new MAC/IP binding to a different MAC address. Routing process 45 there generates the route 70B to include an indication that the new binding of route 70B is an update of the previous binding received in route 70B and thus supersedes the previous binding for the IP address within the EVI 69. Routing process 45 may output the route 70B via one or more BGP sessions with remote PEs or one or more route reflectors for the intermediate L3 network.

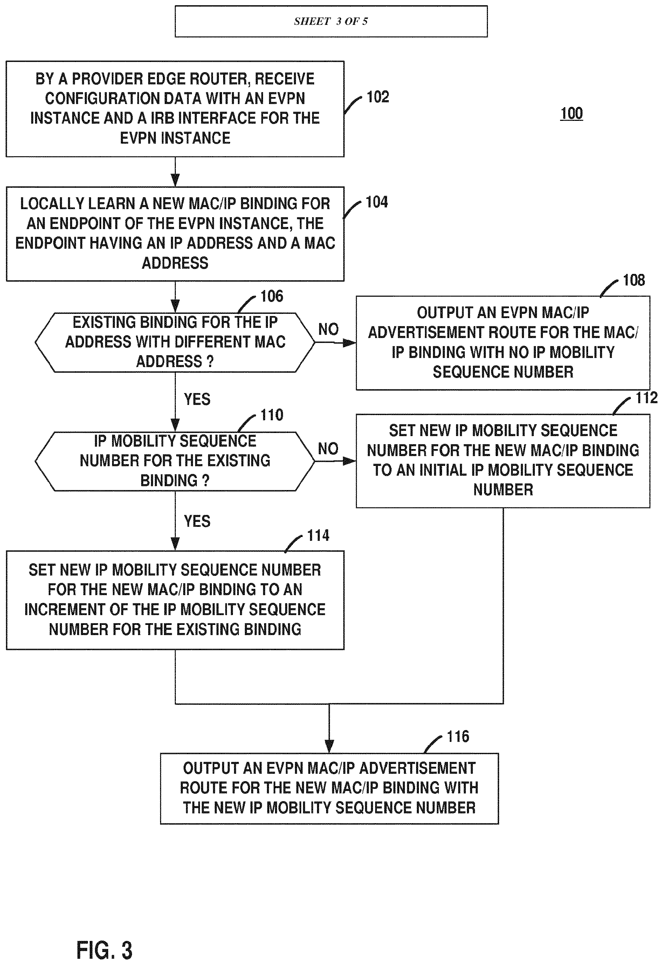

FIG. 3 is a flowchart illustrating an example mode of operation for a provider edge network device to indicate IP mobility in an EVPN instance, in accordance with techniques of this disclosure. Operation 100 is described with respect to PE 20 of FIG. 3. PE 20 receives configuration data that configures an EVI 69 with an IRB interface 68 for IP routing for inter-subnet routing for the EVI 69 (102). PE 20 locally learns a new MAC/IP binding for an endpoint on a local access interface configured for EVI 69 (102). The endpoint has an IP address (IPv4/IPv6) and a MAC address, which are represented in the MAC/IP binding. To generate an EVPN MAC/IP route advertisement 70B to advertise the new MAC/IP binding, PE 20 determines whether PE 20 stores an existing MAC/IP binding for the IP address of the endpoint with a different MAC address for the endpoint (106). For example, PE 20 may store an existing EVPN MAC/IP route advertisement 70A to a routing table for EVI 69 that has the same IP address but a different MAC address for the endpoint. If PE 20 does not store an existing MAC/IP binding in this regard (NO branch of 106), PE 20 may generate and output, to other PEs implementing EVI, a EVPN MAC/IP route advertisement 70B for the new MAC/IP binding that does not include an IP mobility sequence number to indicate the new MAC/IP binding is an update of a MAC/IP binding previously-advertised for the endpoint in the EVI 69 (108).

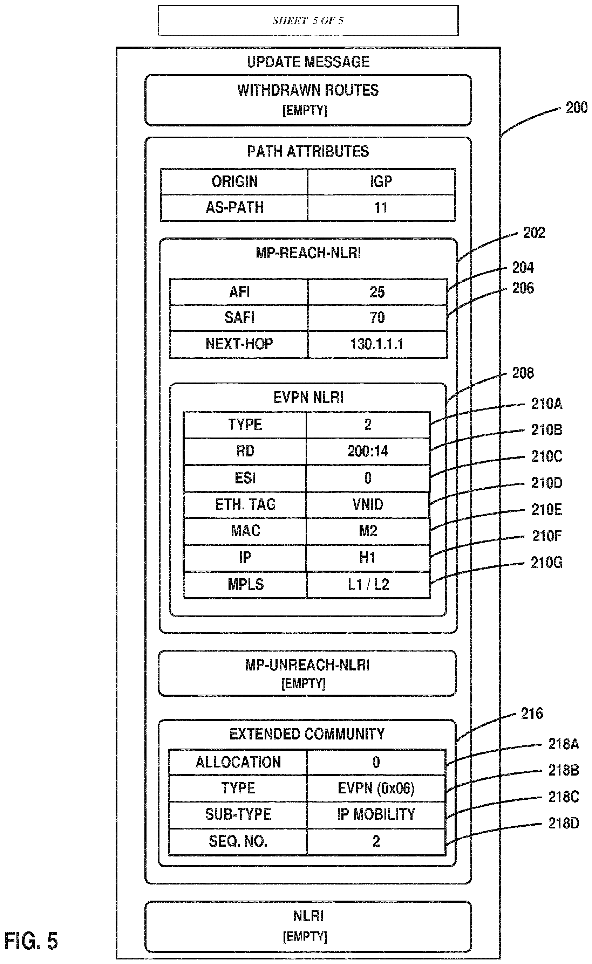

If PE 20 does store an existing MAC/IP binding in this regard (YES branch of 106), PE 20 may determine whether the existing MAC/IP binding is associated with an IP mobility sequence number (110). As described below further with respect to FIG. 5, the IP mobility sequence number may be an IP mobility extended community for an EVPN MAC/IP advertisement route that advertised the existing MAC/IP binding. If the existing MAC/IP binding is not associated with an IP mobility sequence number (NO branch of 110), PE 20 may set a new IP mobility sequence number for the new MAC/IP binding to an initial sequence number (e.g., 0 or 1) (112).

If, however, the existing MAC/IP binding is associated with an IP mobility sequence number (YES branch of 110), PE 20 may set a new IP mobility sequence number for the new MAC/IP binding to an increment of the IP mobility sequence number associated with the existing binding (e.g., the IP mobility sequence number + 1) (114). If there are multiple existing MAC/IP bindings for IP address for the endpoint, PE 20 may set the new IP mobility sequence number for the new MAC/IP binding to an increment of the highest IP mobility sequence number associated with any of the existing bindings.

PE 20 may then generate and output, to other PEs implementing EVI, a EVPN MAC/IP route advertisement 70B for the new MAC/IP binding that includes the new IP mobility sequence number to indicate the new MAC/IP binding is an update of a MAC/IP binding previously-advertised for the endpoint in the EVI 69 (116).

In this way, PEs that implement an EVI may facilitate joint view of the most recent MAC/IP binding state and ameliorate traffic forwarding problems that would otherwise arise if state for an endpoint in the PEs has an IP address associated with an incorrect underlying MAC address for the endpoint. Operation 150 may create a new EVPN IP mobility extended community to carry a sequence number value. This IP mobility community may be included with any EVPN Type 2 route carrying an IP address when the PE originating the Type 2 route detects that an IP move by an endpoint has occurred. To detect IP mobility, a PE learning a new MAC/IP binding on a local access interface for an EVI may check to see if the same IP address is already bound to a different MAC advertised by a different remote PE for the EVI. If there is an existing binding for the same IP address with a different MAC address, the PE locally learning the new MAC/IP binding may advertise the new MAC/IP binding with the IP mobility community, incrementing the sequence number from the last received sequence number for the same IP address.

When other PEs receive the Type 2 route carrying the IP mobility community and sequence number, the other PEs will prefer the MAC/IP binding advertised with the highest sequence number. In the event of a tie in sequence numbers, the advertisement route from the PE with the lowest IP address may be preferred so that all PEs behave deterministically in determining the best MAC/IP binding to use for the IP address of the endpoint. Other tie-breaker methods may be used, however.

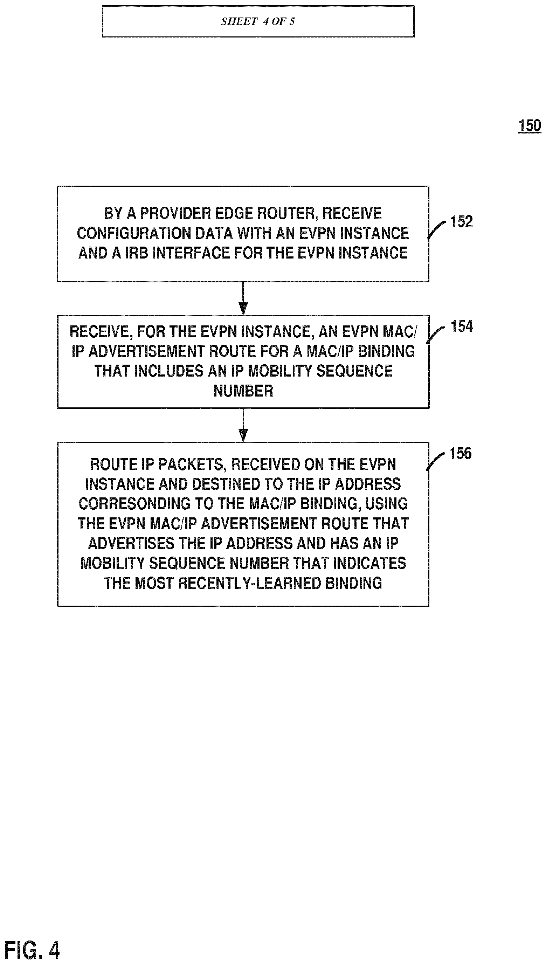

FIG. 4 is a flowchart illustrating an example mode of operation for a provider edge network device to perform inter-subnet routing in an EVPN instance using IP mobility sequence numbers associated with advertised MAC/IP bindings, in accordance with techniques of this disclosure. Operation 150 is described with respect to PE 20 of FIG. 3.

PE 20 receives configuration data that configures an EVI 69 with an IRB interface 68 for IP routing for inter-subnet routing for the EVI 69 (152). PE 20 receives one or more EVPN MAC/IP advertisement routes that each includes a MAC/IP binding for an endpoint of the EVPN and may also include, in some cases, an IP mobility sequence number (154). Each of the MAC/IP bindings includes in the one or more EVPN MAC/IP advertisement routes may have the same IP address and a different MAC address, indicating IP mobility by the endpoint. PE 20 may store the EVPN MAC/IP advertisement routes to a routing table for the EVI 69.

In response to receiving a packet on an access link for the EVI 69, the packet destined for a MAC address of IRB interface 68 and thus requiring IP routing, PE 20 routes the packet according to the EVPN MAC/IP advertisement route of the one or more EVPN MAC/IP advertisement routes that has an IP mobility sequence number that indicates the most recently-learned MAC/IP binding for the endpoint (156). For example, PE 20 may select the EVPN MAC/IP advertisement route with the largest IP mobility sequence number, or in some cases the EVPN MAC/IP advertisement route that has an IP mobility sequence number where others of the EVPN MAC/IP advertisement routes do not have an associated IP mobility sequence number. In some cases, PE 20 may determine previously-stored bindings for the IP address of MAC/IP advertisement routes from an ARP or NDP table. PE 20 may obtain bindings by learning the bindings locally (e.g., on a local access interface for the EVI) which may be stored to an ARP or NDP table, or by learning the bindings remotely (e.g., from received EVPN MAC/IP advertisement routes.

FIG. 5 is a block diagram illustrating an example EVPN MAC/IP advertisement route that includes, in accordance with techniques described herein, an IP mobility sequence number to indicate IP mobility by an endpoint of an EVPN instance. Extended BGP UPDATE message 200 may conform to MP-BGP and includes MP-REACH-NLRI 202 advertising a EVPN MAC/IP advertisement route for a customer endpoint of an EVPN having an IP address and a MAC address. Extended BGP UPDATE message 200 may represent an example instance of MAC/IP advertisement route 5B illustrated in FIG. 1. For purposes of illustration, extended BGP UPDATE message 200 is illustrated using glyphs, rather than with packet fields.

MP-REACH-NLRI 202 of extended BGP UPDATE message 200 specifies an Address Family Identifier (AFI) 204 of 25 and a value for the Subsequent AFI (SAFI) 206 of 70 to identify EVPN NLRI 208 as carrying an EVPN route. AFI 204 and SAFI 206 may in some instances have different values, as assigned by a private party or by the Internet Assigned Numbers Authority (IANA).

EVPN NLRI 208 includes MAC/IP advertisement fields 210A-210G, at least in some examples in accordance with RFC 7432. EVPN NLRI 208 may include more or fewer fields 210 in various examples. EVPN NLRI 208 includes a MAC/IP binding for a customer endpoint identified by MAC field 210E value M2 and IP address field 210F value *H1.* That is, the PE device outputting extended BGP UPDATE 200 may have locally learned the MAC/IP binding of *H1* / *M1* of the customer endpoint on a EVI.

In accordance with techniques of this disclosure, BGP UPDATE includes an EVPN IP mobility extended community 216 to indicate that the MAC/IP binding in EVPN NLRI 208 is an update of the previous binding learned (e.g., remotely) by the advertising PE device and thus supersedes the previous binding for the IP address *H1* in IP address field 210F within the EVI. EVPN IP mobility extended community 216 may represent a BGP extended community. EVPN IP mobility extended community 216 includes allocation field 218A, type field 218B, sub-type field 218C, and IP mobility sequence number field 218D. Type field 218B indicates the extended community is an EVPN type, sub-type field indicates the extended community is an EVPN IP mobility sub-type. Sequence number 218D includes a value (here, integer value 2) that indicates an IP mobility status, within the EVI, for the customer endpoint associated with the MAC/IP binding. Sequence number 218D may be generated by a PE device (e.g., PE 20 of FIG. 2) according to any of the techniques described herein for indicating that the MAC/IP binding in EVPN NLRI 208 is an update of a previous MAC/IP binding for the customer endpoint having a new MAC address while retaining its IP address due, e.g., to a migration to a different customer network behind a different PE implementing the EVI. Sequence number 218D may be used by a PE device (e.g., PE 20 of FIG. 2) according to any of the techniques described herein for IP routing using an indication that the MAC/IP binding in EVPN NLRI 208 is an update of a previous MAC/IP binding for the customer endpoint having a new MAC address while retaining its IP address due, e.g., to a migration to a different customer network behind a different PE implementing the EVI.

Other BGP communities, extended communities, and NLRI, such as route targets for BGP UPDATE 200, are not shown for simplicity. MP-BGP and BGP extended communities are described in "Multiprotocol Extensions for BGP-4," IETF Network Working Group, Request for Comments (RFC) 4760, January 2007; and "BGP Extended Communities Attribute", IETF Network Working Group, Request for Comments (RFC) 4360, February, 2006; each of which being incorporated by reference in their entireties.

The techniques described in this disclosure may be implemented, at least in part, in hardware, software, firmware, or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of this disclosure.

Such hardware, software, and firmware may be implemented within the same device or within separate devices to support the various techniques described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

The techniques described in this disclosure may also be embodied or encoded in an article of manufacture including a computer-readable medium encoded with instructions. Instructions embedded or encoded in an article of manufacture including a computer-readable medium encoded, may cause one or more programmable processors, or other processors, to implement one or more of the techniques described herein, such as when instructions included or encoded in the computer-readable medium are executed by the one or more processors. Computer readable storage media may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media. In some examples, a computer-readable storage media may include non-transitory media. The term "non-transitory" may indicate that the storage medium is not embodied in a carrier wave or a propagated signal. In certain examples, a non-transitory storage medium may store data that can, over time, change (e.g., in RAM or cache). Computer-readable media can also include transmission media that convey the computer-readable instructions over a transmission path such as a cable or wire, or a wireless channel such as air.

Thus, from one perspective, there has been described a provider edge device that provides L2 virtual bridge connectivity for at least one customer network using an EVPN instance and L3 routing using an IRB interface that is a L3 routing interface assigned to the EVPN instance; the provider edge device obtains an indication of a new binding for an endpoint device of the at least one customer network, the new binding comprising a first L2 address and a L3 address that are assigned to the endpoint device; and the provider edge device outputs, in response to determining the provider edge device stores a prior binding for the endpoint device of a second L2 address and the L3 address that are assigned to the endpoint device, an EVPN route comprising an indication of the new binding and an indication the new binding is an updated binding of the prior binding for the endpoint device.

In addition to or as an alternative to the above, the following examples are described. The features described in any of the following examples may be utilized with any of the other examples described herein.
Example 1. A method comprising: receiving, by a provider edge device of a layer 3 network, configuration data configuring the provider edge device to provide layer 2 virtual bridge connectivity for at least one customer network using an Ethernet virtual private network (EVPN) instance and layer 3 routing using an integrated routing and bridging (IRB) interface that is a layer 3 routing interface assigned to the EVPN instance; obtaining, by the provider edge device, an indication of a new binding for an endpoint device of the at least one customer network, the new binding comprising a first layer 2 address and a layer 3 address that are assigned to the endpoint device; and outputting, by the provider edge device in response to determining the provider edge device stores a prior binding for the endpoint device of a second layer 2 address and the layer 3 address that are assigned to the endpoint device, an EVPN route comprising an indication of the new binding and an indication the new binding is an updated binding of the prior binding for the endpoint device.
Example 2. The method of example 1, wherein the EVPN route comprises a Border Gateway Protocol EVPN Media Access Control (MAC) / Internet Protocol (IP) advertisement route comprising EVPN Network Layer Reachability Information (NLRI), wherein a MAC address field of the EVPN NLRI comprises the first layer 2 address, and wherein an IP address field of the EVPN NLRI comprises the layer 3 address.
Example 3. The method of example 1 or 2, wherein the EVPN route indicates the provider edge device is a next hop for the EVPN route.
Example 4. The method of example 1, 2 or 3, wherein an IP mobility extended community of the EVPN route comprises the indication the new binding is an updated binding of the prior binding.
Example 5. The method of example 4, wherein the IP mobility extended community comprises a sequence number field having a IP mobility sequence number value that provides the indication the new binding is an updated binding of the prior binding.
Example 6. The method of any of examples 1 to 5, wherein an IP mobility sequence number of the EVPN route comprises the indication the new binding is an updated binding of the prior binding.
Example 7. The method of example 6, further comprising: generating, by the provider edge device, the IP mobility sequence number of the EVPN route based at least on an IP mobility sequence number associated with the prior binding.
Example 8. The method of example 6 or 7, further comprising: generating, by the provider edge device in response to determining the prior binding is not associated with an IP mobility sequence number, the IP mobility sequence number of the EVPN route as an initial IP mobility sequence number.
Example 9. The method of any of examples 1 to 8, wherein the EVPN route comprises a first EVPN route, and wherein determining the provider edge device stores the prior binding of the second layer 2 address and the layer 3 address for the endpoint device of the EVPN instance comprises: determining, by the provider edge device, a routing table for the EVPN instance stores a first EVPN route that includes the prior binding.
Example 10. The method of any of examples 1 to 9, wherein determining the provider edge device stores the prior binding of the second layer 2 address and the layer 3 address for the endpoint device of the EVPN instance comprises: determining, by the provider edge device, that at least one of an Address Resolution Protocol and Neighbor Discovery Protocol table stores the second binding.
Example 11. The method of any of examples 1 to 10, wherein receiving the indication of the first binding comprises receiving, by the provider edge device on a local access interface configured for the EVPN instance, a packet that associates the first layer 2 address and the layer 3 address for the endpoint device of the EVPN instance.
Example 12. The method of any of examples 1 to 11, wherein the provider edge device comprises a first provider edge device, the method further comprising: receiving, by the first provider edge device, a packet from the endpoint device; and forwarding, by the provider edge device in response to determining the packet comprises a layer 2 destination address corresponding to a layer 2 address for the IRB interface, the packet to a second provider edge device according to the EVPN route based at least on the indication the new binding is an updated binding of the prior binding.
Example 13. The method of any of examples 1 to 12, wherein the provider edge device comprises a first provider edge device, and wherein the EVPN route comprises a first EVPN route, the method further comprising: receiving, by the first provider edge device prior to obtaining the indication of the new binding for the endpoint device, a second EVPN route originated by a second provider edge device and comprising an indication of the prior binding for the endpoint device; receiving, by the first provider edge device, a packet destined for the endpoint device; and forwarding, by the first provider edge device, the packet to the second provider edge device according to the second EVPN route.
Example 14. A method comprising: receiving, by a first provider edge device of a layer 3 network, configuration data configuring the provider edge device to provide layer 2 virtual bridge connectivity for at least one customer network using an Ethernet virtual private network (EVPN) instance and layer 3 routing using an integrated routing and bridging (IRB) interface that is a layer 3 routing interface assigned to the EVPN instance; obtaining, by the first provider edge device, an indication of a binding for an endpoint device of the at least one customer network, the binding comprising a first layer 2 address and a layer 3 address that are assigned to the endpoint device; receiving, by the first provider edge device, an EVPN route comprising an indication of a new binding of a second layer 2 address and the layer 3 address that are assigned to the endpoint device and an indication the new binding is an updated binding of the binding; and sending, by the first provider edge device in response to determining a packet comprises a layer 2 destination address corresponding to a layer 2 address for the IRB interface, the packet to a second provider edge device according to the EVPN route based at least on the indication the new binding is an updated binding of the binding.
Example 15. The method of example 14, wherein the EVPN route indicates the second provider edge device is a next hop for the EVPN route.
Example 16. The method of example 14 or 15, wherein the EVPN route comprises a Border Gateway Protocol EVPN Media Access Control (MAC) / Internet Protocol (IP) advertisement route comprising EVPN Network Layer Reachability Information (NLRI), wherein a MAC address field of the EVPN NLRI comprises the second layer 2 address, and wherein an IP address field of the EVPN NLRI comprises the layer 3 address.
Example 17. The method of example 14, 15 or 16, wherein an IP mobility extended community of the EVPN route comprises the indication the new binding is an updated binding of the binding.
Example 18. The method of example 17, wherein the IP mobility extended community comprises a sequence number field having a IP mobility sequence number value that provides the indication the new binding is an updated binding of the binding.
Example 19. The method of any of examples 14 to 18, wherein an IP mobility sequence number of the EVPN route comprises the indication the new binding is an updated binding of the binding.
Example 20. A network device comprising: one or more processors operably coupled to a memory; a configuration interface configured for execution by the one or more processors to receive configuration data to configure the provider edge device to provide layer 2 virtual bridge connectivity for at least one customer network using an Ethernet virtual private network (EVPN) instance and layer 3 routing using an integrated routing and bridging (IRB) interface that is a layer 3 routing interface assigned to the EVPN instance; a learning module configured for execution by the one or more processors to obtain an indication of a new binding for an endpoint device of the at least one customer network, the new binding comprising a first layer 2 address and a layer 3 address that are assigned to the endpoint device; and a routing process configured for execution by the one or more processors to output, in response to determining the provider edge device stores a prior binding for the endpoint device of a second layer 2 address and the layer 3 address that are assigned to the endpoint device, an EVPN route comprising an indication of the new binding and an indication the new binding is an updated binding of the prior binding for the endpoint device.
Example 21. A network device comprising: one or more processors operably coupled to a memory; a configuration interface configured for execution by the one or more processors to receive configuration data to configure the provider edge device to provide layer 2 virtual bridge connectivity for at least one customer network using an Ethernet virtual private network (EVPN) instance and layer 3 routing using an integrated routing and bridging (IRB) interface that is a layer 3 routing interface assigned to the EVPN instance; a learning module configured for execution by the one or more processors to obtain an indication of a binding for an endpoint device of the at least one customer network, the binding comprising a first layer 2 address and a layer 3 address that are assigned to the endpoint device; a routing process configured for execution by the one or more processors to an EVPN route comprising an indication of a new binding of a second layer 2 address and the layer 3 address that are assigned to the endpoint device and an indication the new binding is an updated binding of the binding, wherein the routing process is further configured to send, in response to a determination a packet comprises a layer 2 destination address corresponding to a layer 2 address for the IRB interface, the packet to a second provider edge device according to the EVPN route based at least on the indication the new binding is an updated binding of the binding.

Moreover, any of the specific features set forth in any of the examples described above may be combined into beneficial examples of the described techniques. That is, any of the specific features are generally applicable to all examples of the disclosed approached. Various examples have been described.

## Claims

1. A method comprising:
receiving, by a provider edge device of a layer 3 network, configuration data configuring the provider edge device to provide layer 2 virtual bridge connectivity for at least one customer network using an Ethernet virtual private network (EVPN) instance and layer 3 routing using an integrated routing and bridging (IRB) interface that is a layer 3 routing interface assigned to the EVPN instance;
obtaining, by the provider edge device, an indication of a new binding for an endpoint device of the at least one customer network, the new binding comprising a first layer 2 address and a layer 3 address that are assigned to the endpoint device; and
outputting, by the provider edge device in response to determining the provider edge device stores a prior binding for the endpoint device of a second layer 2 address and the layer 3 address that are assigned to the endpoint device, an EVPN route comprising an indication of the new binding and an indication the new binding is an updated binding of the prior binding for the endpoint device.

2. The method of claim 1,
wherein the EVPN route comprises a Border Gateway Protocol EVPN Media Access Control (MAC) / Internet Protocol (IP) advertisement route comprising EVPN Network Layer Reachability Information (NLRI),
wherein a MAC address field of the EVPN NLRI comprises the first layer 2 address, and
wherein an IP address field of the EVPN NLRI comprises the layer 3 address.

3. The method of any combination of claim 1-2, wherein the EVPN route indicates the provider edge device is a next hop for the EVPN route.

4. The method of any combination of claim 1-3, wherein an IP mobility extended community of the EVPN route comprises the indication the new binding is an updated binding of the prior binding.

5. The method of any combination of claim 1-4,
wherein the EVPN route comprises a first EVPN route, and
wherein determining the provider edge device stores the prior binding of the second layer 2 address and the layer 3 address for the endpoint device of the EVPN instance comprises:
determining, by the provider edge device, a routing table for the EVPN instance stores a first EVPN route that includes the prior binding.

6. The method of any combination of claim 1-5,
wherein determining the provider edge device stores the prior binding of the second layer 2 address and the layer 3 address for the endpoint device of the EVPN instance comprises:
determining, by the provider edge device, that at least one of an Address Resolution Protocol and Neighbor Discovery Protocol table stores the second binding.

7. The method of any combination of claim 1-6, wherein the provider edge device comprises a first provider edge device, the method further comprising:
receiving, by the first provider edge device, a packet from the endpoint device; and
forwarding, by the provider edge device in response to determining the packet comprises a layer 2 destination address corresponding to a layer 2 address for the IRB interface, the packet to a second provider edge device according to the EVPN route based at least on the indication the new binding is an updated binding of the prior binding.

8. The method of any combination of claim 1-7,
wherein the provider edge device comprises a first provider edge device, and
wherein the EVPN route comprises a first EVPN route, the method further comprising:
receiving, by the first provider edge device prior to obtaining the indication of the new binding for the endpoint device, a second EVPN route originated by a second provider edge device and comprising an indication of the prior binding for the endpoint device;
receiving, by the first provider edge device, a packet destined for the endpoint device; and
forwarding, by the first provider edge device, the packet to the second provider edge device according to the second EVPN route.

9. A method comprising:
receiving, by a first provider edge device of a layer 3 network, configuration data configuring the provider edge device to provide layer 2 virtual bridge connectivity for at least one customer network using an Ethernet virtual private network (EVPN) instance and layer 3 routing using an integrated routing and bridging (IRB) interface that is a layer 3 routing interface assigned to the EVPN instance;
obtaining, by the first provider edge device, an indication of a binding for an endpoint device of the at least one customer network, the binding comprising a first layer 2 address and a layer 3 address that are assigned to the endpoint device;
receiving, by the first provider edge device, an EVPN route comprising an indication of a new binding of a second layer 2 address and the layer 3 address that are assigned to the endpoint device and an indication the new binding is an updated binding of the binding; and
sending, by the first provider edge device in response to determining a packet comprises a layer 2 destination address corresponding to a layer 2 address for the IRB interface, the packet to a second provider edge device according to the EVPN route based at least on the indication the new binding is an updated binding of the binding.

10. The method of claim 9,
wherein the EVPN route comprises a Border Gateway Protocol EVPN Media Access Control (MAC) / Internet Protocol (IP) advertisement route comprising EVPN Network Layer Reachability Information (NLRI),
wherein a MAC address field of the EVPN NLRI comprises the second layer 2 address, and
wherein an IP address field of the EVPN NLRI comprises the layer 3 address.

11. The method of any combination of claim 9-10, wherein an IP mobility extended community of the EVPN route comprises the indication the new binding is an updated binding of the binding.

12. A network device comprising:
one or more processors operably coupled to a memory;
a configuration interface configured for execution by the one or more processors to receive configuration data to configure the provider edge device to provide layer 2 virtual bridge connectivity for at least one customer network using an Ethernet virtual private network (EVPN) instance and layer 3 routing using an integrated routing and bridging (IRB) interface that is a layer 3 routing interface assigned to the EVPN instance;
a learning module configured for execution by the one or more processors to obtain an indication of a new binding for an endpoint device of the at least one customer network, the new binding comprising a first layer 2 address and a layer 3 address that are assigned to the endpoint device; and
a routing process configured for execution by the one or more processors to output, in response to determining the provider edge device stores a prior binding for the endpoint device of a second layer 2 address and the layer 3 address that are assigned to the endpoint device, an EVPN route comprising an indication of the new binding and an indication the new binding is an updated binding of the prior binding for the endpoint device.

13. The network device of claim 12, further comprising means for performing the steps of the method recited by any of claims 2-8.

14. A network device comprising:
one or more processors operably coupled to a memory;
a configuration interface configured for execution by the one or more processors to receive configuration data to configure the provider edge device to provide layer 2 virtual bridge connectivity for at least one customer network using an Ethernet virtual private network (EVPN) instance and layer 3 routing using an integrated routing and bridging (IRB) interface that is a layer 3 routing interface assigned to the EVPN instance;
a learning module configured for execution by the one or more processors to obtain an indication of a binding for an endpoint device of the at least one customer network, the binding comprising a first layer 2 address and a layer 3 address that are assigned to the endpoint device;
a routing process configured for execution by the one or more processors to an EVPN route comprising an indication of a new binding of a second layer 2 address and the layer 3 address that are assigned to the endpoint device and an indication the new binding is an updated binding of the binding,
wherein the routing process is further configured to send, in response to a determination a packet comprises a layer 2 destination address corresponding to a layer 2 address for the IRB interface, the packet to a second provider edge device according to the EVPN route based at least on the indication the new binding is an updated binding of the binding.

15. The network device of claim 14, further comprising means for performing the steps of the method recited by any of claims 10-11.
